# EUROPEAN PATENT APPLICATION

(11) **EP 3 670 979 A1**
(43) Date of publication of application: **24.06.2020**
(21) Application number: 19218658.3
(22) Date of filing: 20.12.2019
(51) Int. Cl.: F16K 3/26, F16K 13/00, F16K 31/122

(54) **A COAXIAL SLIDING VALVE, ESPECIALLY PYROTECHNIC**

(30) Priority: 21.12.2018 PL 42830518
(71) Applicant: SIEC BADAWCZA LUKASIEWICZ-INSTYTUT LOTNICTWA, 02-256 Warszawa (PL)
(72) Inventor: BARTKOWIAK, Bartosz, 03-450 Warszawa (PL)
(74) Representative: Kowal, Elzbieta

(57) **Abstract**

The subject of the invention is the coaxial slide valve, in particular pyrotechnic, comprising a body 2 in a form of a tubular rod terminated on both ends with inlet and outlet stubs, wherein coaxial radial holes are formed in the body 2 which are evenly distributed on its circumference to constitute a flow path of the medium controlled by the valve 1, wherein the slider 12, matching with its shape to the body 2 and cooperating directly with it, is mounted at the annular body 2. The valve is characterized in that it comprises a housing 8 mounted at the body 2 and forming, together with the body 2, a slide chamber in which a slidably moved slider 12 is arranged and moved by a propellant medium.

## Description

The subject of the invention is a coaxial slide valve, in particular pyrotechnic.

### Description

### Technical Field

A valve of this type is used especially in pressure installations, in particular in aviation and rocket installations, to supply a compressed fuel, oxidizer or gas to an engine.

### Background

A pyrotechnic valve, in particular for fire-fighting devices is known from the PL 161947 description, comprised a body, an inlet connector and locking and closing elements as well as a pyrotechnic actuator.

A slide valve for a pipe through which liquid, sludge or the like impurities flow is known from the publication PCT/EP2002/004934. An actuator driven by the compressed air is designed to control the slider drive to open or block a flow. The slider is guided in a housing having a slit that completely covers a through opening. During operating movements of the slider the housing is filled with a compressed air and therefore impurities are prevented to flow from the through opening into the housing.

A slide valve is known from the description of application KR101660460 comprised a body having channels inside its both ends and an opening unit installed on the outer circumference of the body for moving, opening and closing the connecting channels. It also includes a partition wall mounted between the channels. The body has a form of a tubular rod terminated on both ends with inlet and outlet stubs. At the body, along its circumference, coaxial radial holes are formed constituting the flow path for a valve actuating medium. At the body a slider is mounted that is adapted to a shape of the body and directly cooperates with it.
The solutions disclosed in the above publications do not ensure low weight of a valve, its reliability and quick action.

### Object of the Invention

The object of the invention is to design a reliable, structurally simple and scalable valve of reliable and quick action, which is suitable for use in pressure sounding rocket installations, and which will eliminate the disadvantages of valves known from the state of the art.

### Summary of the Invention

A coaxial slide valve, in particular pyrotechnic, according to the invention, comprising a body in a form of a tubular rod terminated on both ends with inlet and outlet stubs, wherein coaxial radial holes are formed in the body which are evenly distributed on its circumference to constitute a flow path of the medium controlled by the valve, wherein a slider matching its shape to the body and cooperating directly with it is mounted at the annular body, is characterized in that it includes a housing mounted on the body and forming together with the body a slide chamber in which a slidably moved slider is arranged and moved by the propellant medium.

Preferably, the housing is tightly mounted at the body and the housing is provided with a supplying port in fluid communication to the slide chamber.
Preferably, the body includes an annular recess, walls of which together with a wall of the housing define one part of the slide chamber, while the other part of the slide chamber, from the side of the supplying port, is a pressure chamber.

Preferably, the supplying port of the housing connects the pressure chamber to the source of the propellant medium for driving the slider in order to deliver a propelling pulse from external source.

In particular, the supplying port is at most partially obscured by the slider.

Preferably, the slider is arranged in the slide chamber with one end located in the pressure chamber and directed towards the supplying port of the housing and, in the position of the slider in which the radial holes of the body are closed, said end of the slider is located at most partly in the supplying port of the housing.

Preferably, the end of the slider is cone shaped and in particular the end of the slider may have radial slits.

Preferably, the valve is a single-action valve, wherein the actuation being effected by moving the slider in the slide chamber in a direction away from the supplying port of the housing and under the influence of the propellant gas pulse from the source.

Preferably, the source of the propellant gas is an explosive cartridge.

Preferably, the valve has compact structure.

The advantage of the proposed solution is that the valve is technologically and structurally simple and meets its role as a reliable quick action device. In addition, the housing surrounding the slider mounted at the body ensures a tight isolation of the slider from the influence of external atmospheric conditions, e.g. weather. This is very important for sounding rockets. The proposed solution also ensures that the valve can be in the idle state for a long time before use. It is very important in said application that no dirt enters between the body and the slider that could affect the functioning of the entire valve, which is provided by the solution described here.

### Description of the figures

The object of the invention is described in the embodiment shown in the drawing, in which
Fig. 1 shows a perspective exploded view of a valve according to the invention;
Fig. 2 shows the valve of Fig. 1 in an assembled form and in cross-section along the longitudinal axis of the valve, in the slider position before actuation;
Fig. 3 - the valve of Fig. 2 in the slider position after actuation.

### Description of Embodiment

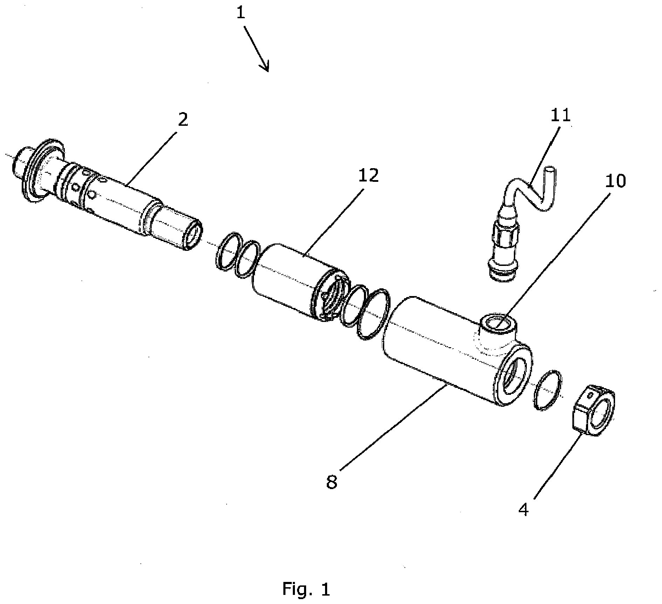

The coaxial slide valve 1 shown in Fig. 1 comprises a body 2 in the form of a rod terminated on both ends with inlet and outlet stubs. At the body 2, along its circumference, coaxial radial holes are formed constituting the flow path of the medium controlled by the valve 1. At the body a slider 12 is mounted that is adapted to a shape of the body and directly cooperates with it. In addition, the valve has a housing 8 with a port 10 for supplying the propellant medium from the source 11 in the form of an explosive cartridge.

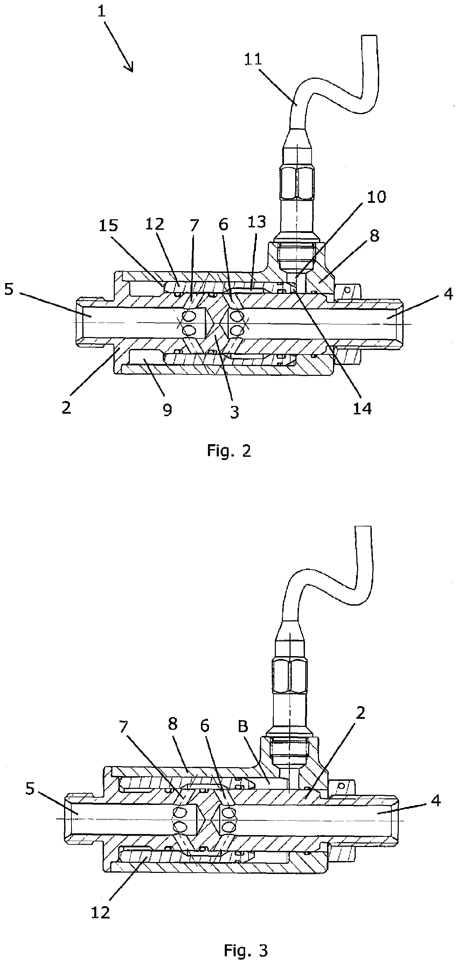

As can be seen in Figs. 2 and 3, the valve body 2 in the form of a hollow rod has a separation wall 3 dividing the body 2 into two chambers 4 and 5. The body 2 and the slider 12 coaxially arranged thereon are tightly surrounded by the cylindrical housing 8. Next to the separation wall 3, the body 2 includes a radial connecting hole 6 extending to the chamber 4 of the body 2, and on the opposite side and next to the partition wall 3, the body 2 includes a second connecting hole 7 extending to the second chamber 5 of the body 2.

The housing 8 is coaxial with the body 2, which includes an annular recess 9 formed on one side and the walls of which together with the wall of the housing 8 define one part of the slide chamber. The slide chamber includes connecting holes 6 and 7 of the body 2. These holes constitute the flow path of the controlled medium and are arranged radially and evenly along the circumference of the body 2, as can be seen in Fig. 1.
The second part of the slide chamber is a pressure chamber B.

According to Figs. 2 and 3, one end of the housing 8 is provided with the supplying port 10 in fluid communication to the slide chamber, in its part being the pressure chamber B, and intended for supplying the propellant medium. Preferably, the propellant medium is a gas, for example from the pyrotechnic cartridge. The slider 12 having a radial undercut 13 designed to connect, in open position of the valve 1 and both connecting holes 6 and 7 of the slider 12, is slidably mounted in the slide chamber, wherein the connecting hole 6 being located near the supplying port 10 of the housing 8. The slider 12 is arranged in the slide chamber with its one end 14 directed toward the supplying port 10.

In Fig. 2 the valve 1 is in a closed position. The connecting hole 7 in the body 2 is obscured by the wall of the slider 12 provided at the second end 15 of the slider 12 opposite to the end 14.The second connecting hole 6 is open towards the undercut of the groove 13 formed on the slider 12. The end 14 of the slider is partially arranged in the port 10.

In Fig. 3 the valve 1 is in an open position. The connecting holes 6 and 7 of the body 2 are open towards the undercut 13 and are connected to each other through this undercut 13.

The slider 12 is adapted with its shape for direct cooperation with the body 2 and is an element for controlling the flow of the medium. It is simultaneously the actuator to move this control element by forming an annular pressure chamber B. Such solution ensures light and reliable construction of the device without a need for external moving elements, what is commonly known in the art. Ensuring the balance of pressure forces from the controlled medium acting on the slider 12 is possible by using the same diameter of the cylindrical surface of the body 2 constituting the path of the slider 12 along its entire length.

The slider 12 illustrated in Figs. 2 and 3 has a conical-shaped end 14 or has radial slits. Such shape means that the controlling medium supplied through the supplying port 10 is capable to easy flow to the entire pressure chamber B.

It should be noted that the annular slider 12 plays the role of the main actuator, because it moves under influence of the gas impulse coming from the external source to open and close the connecting holes 6 and 7 of the body 2, and thus it causes the valve 1 to actuate.

The valve comprises a series of gaskets (Fig. 1), which are used in the known manner to connect and seal its individual components together.

The operating principle of the valve 1 will be described below in reference to Fig. 2 and Fig. 3.

After firing the pyrotechnic cartridge, the compressed gas contained in the cartridge 11 flows through the supplying port 10 to the end 14 of the slider 12 (pressure chamber B) and expands to cause movement of the slider 12 in opposite direction from the supplying port 10 from the closed position of the valve 1 in which one row of radial holes of the body 2 is tightly obscured to close tightly the flow path (NC type) to the open position of the valve 1. The connecting hole 6 of the body 2 is connected through the undercut 13 to the connecting hole 7 of the body 2, while the slider 12 comes with its other end 15, opposite the supplying port 10 of the housing 8, to the end of the slide chamber and stops in this position.

It should be noted that the valve 1 may also be a multiple-action valve, but then the slider 12 would have to be connected, for example, to an actuator that would move the slider 12 from the position of the separation of the connecting hole 6 from the hole 7 to the position of the connection of both these connecting holes 6, 7 and would hold the slider 12 in both positions through the required time.

The valve 1 described above and illustrated in Figs. 1, 2 and 3 is a single-action valve, which means that after moving from the closed position to the open position, it no longer returns to the closed position.

Preferably, the propellant gas pressure can be reduced by using apertures or a non-return valve (not shown) which must be exposed in the offset position of the slider.

The valve construction illustrated and described herein is only the preferred embodiment. The structural elements listed here are only examples. It is clear that improvements are possible through the use of different, more preferred structural elements, provided that such changes do not result in departing from the scope of this disclosure.

### List of References

1.- valve
2 - body
3.-separation wall
B - pressure chamber
4- chamber of the body 2
5 - second chamber of the body 2
6 - first connecting hole
7 - second connecting hole
8 - housing
9- annular recess
10 - supplying port
11 - source of the propelling factor (cartridge)
12 - slider
13 - connecting undercut of the slider 12
14 - one end of the slider
15 - other end of the slider

## Claims

1. A coaxial slide valve, in particular pyrotechnic, comprising a body 2 in a form of a tubular rod terminated on both ends with inlet and outlet stubs, wherein coaxial radial holes are formed in the body 2 which are evenly distributed on its circumference to constitute a flow path of the medium controlled by the valve 1, wherein the slider 12, matching with its shape to the body 2 and cooperating directly with it, is mounted at the annular body 2,
**characterized in that** it comprises a housing 8 mounted at the body 2 and forming, together with the body 2, a slide chamber in which a slider 12 is movably arranged and moved by a propellant medium.

2. The valve according to claim 1, **characterized in that** the housing 8 is tightly attached to the body 2.

3. The valve according to claim 1, **characterized in that** the housing 8 has a supplying port 10 in fluid communication to the slide chamber.

4. The valve according to claim 2, **characterized in that** the body 2 includes an annular recess 9 the walls of which together with the wall of the housing 8 define one part of the slide chamber.

5. The valve according to claim 4, **characterized in that** the second part of the slide chamber, from the supplying port 10 side, is a pressure chamber B.

6. The valve according to claim 5, **characterized in that** the supplying port 10 of the housing 8 connects the pressure chamber B to the source 11 of the propellant medium for driving the slider 12 in order to deliver a propelling pulse from external source 11.

7. The valve according to claim 5, **characterized in that** the supplying port 10 is at most partially obscured by the slider 12.

8. The valve according to claim 7, **characterized in that** the slider 12 is arranged in the slide chamber with one end 14 located in the pressure chamber B and directed towards the supplying port 10 of the housing 8 and, in the position of the slider 12 in which the radial holes 7, 6 of the body 2 are closed, said end 14 of the 12 slider is located at most partly in the supplying port 10 of the housing 8.

9. The valve according to claim 8, **characterized in that** the end 14 of the slider 12 has a cone-like shape.

10. The valve according to claim 8, **characterized in that** the end 14 of the slider 12 has radial slits.

11. The valve according to claim 1, **characterized in that** it valve is the single-action valve, wherein the actuation being effected by moving the slider 12 in the slide chamber in a direction away from the supplying port 10 of the housing 8 and under the influence of the propellant gas pulse from the source 11.

12. The valve according to claim 11, **characterized in that** the source 11 of the propellant gas is the explosive cartridge.

13. The valve according to claim 1, **characterized in that** it has a compact structure.
